# EUROPÄISCHE PATENTANMELDUNG

(11) **EP 0 576 966 A2**
(43) Veröffentlichungstag der Anmeldung: **05.01.1994**
(21) Anmeldenummer: 93109930.3
(22) Anmeldetag: 22.06.1993
(51) Int. Cl.: H02G 1/12

(54) **Verfahren und Einrichtung zum Ablängen und Abisolieren ummantelter Kabel**

(30) Priorität: 01.07.1992 CH 59/92
(71) Anmelder: RAMATECH, CH-6280 Hochdorf (CH)
(72) Erfinder: Randegger, Kaspar, CH-6024 Hildisrieden (CH)
(74) Vertreter: Althoff, Gerhard

(57) **Zusammenfassung**

Es werden ein Verfahren und eine Einrichtung zum Ablängen und Abisolieren ummantelter Kabel, Litzen, Drähte oder dergleichen vorgeschlagen, mittels welchem/welcher das Kabel auf vorbestimmte Längen geschnitten und an einem oder beiden Enden der Kabelmantel eingeschnitten und teilweise oder ganz abgezogen wird.

Die Einrichtung zur Durchführung des Verfahrens umfasst eine Kabel-Transportvorrichtung (25), eine feststehende Schneid- und Trennvorrichtung (80), mindestens eine zum Einschneiden eines Kabelmantels mit Formmessern versehene Abisoliervorrichtung (75,75') sowie mindestens eine Kabelführungs- und Klemmvorrichtung (65,65'), wobei die Vorrichtungen (65,65'; 75,75') relativ zueinander sowie relativ zu der Schneid- und Trennvorrichtung (80) in Längsrichtung des Kabels (1) verstellbar sind.

Die je mit einer Anzahl quer zur Kabeltransportrichtung (X) orientierten und im Abstand zueinander angeordneten Ausnehmungen versehene Kabelführungs- und Klemmvorrichtung (65,65') wird in Abhängigkeit des Kabeldurchmessers entsprechend quer zur Kabeltransportrichtung (X) eingestellt und eingerastet. Zum Klemmen des Kabels wird weiterhin ein zwischen zwei Führungsstücken angeordnetes Klemmstück relativ dazu und quer zur Längsrichtung des Kabels (1) verstellt.

## Beschreibung

Die Erfindung bezieht sich auf ein verfahren und eine Einrichtung zum Ablängen und Abisolieren ummantelter Kabel, Litzen, Drähte oder dergleichen, bei welchem/welcher das Kabel auf vorbestimmte Längen geschnitten und an einem oder beiden Enden der Kabelmantel eingeschnitten und teilweise oder ganz abgezogen wird.

Das ein- oder beidseitige Abisolieren auf bestimmmte Längen abgeschnittener Kabel, Litzen, Drähte oder dergleichen ist allgemein bekannt. Bei den bekannten Einrichtungen ist es jedoch erforderlich, in Abhängigkeit des jeweiligen äusseren Kabeldurchmessers ein entsprechend dimensioniertes Führungselement zu montieren und in Abhängigkeit der gewünschten Abisolierlänge die jeweilige Abisoliervorrichtung in bezug auf eine Schneid- und Trennvorrichtung einzustellen.

Die vorliegende Erfindung befasst sich mit dem Problem einer wirtschaftlichen Bearbeitung von ummantelten Kabeln der eingangs genannten Art, bei welchen der Kabelmantel an mindestens einem Ende für die Weiterverarbeitung ohne besonderen Aufwand entfernt werden kann, wobei der Erfindung die Aufgabe zugrunde liegt, ein Verfahren zu entwickeln sowie eine Einrichtung zur Durchführung des Verfahrens anzugeben, mittels welchem/welcher Kabel mit unterschiedlichen Durchmessern sowie mit unterschiedlichen Abisolierlängen ohne besondere Hilfsmittel mit relativ kurzen Umrüstzeiten weitgehend vollautomatisch ein- oder beidseitig abisolierbar sind.

Die Aufgabe hinsichtlich des Verfahrens wird dadurch gelöst, dass der Kabelmantel von mindestens einer in Kabeltransportrichtung relativ zu einer feststehenden Schneid- und Trennvorrichtung verstellbaren und in Abhängigkeit von der jeweiligen Abisolierlänge durch einstellbare Anschläge begrenzten Abisoliervorrichtung eingeschnitten und von mindestens einer in Abhängigkeit von der Länge des vom Kabel abzuziehenden Kabelmantels relativ zur Abisoliervorrichtung in Kabeltransportrichtung verstellbaren und ebenfalls durch einstellbare Anschläge begrenzten Kabelführungs- und Klemmvorrichtung abgezogen wird.

Die Einrichtung zur Durchführung des Verfahrens umfasst eine Kabel-Transportvorrichtung, eine feststehende Schneid- und Trennvorrichtung sowie mindestens eine relativ dazu in Kabeltransportrichtung verstellbare und zum Einschneiden des Kabelmantels mit Formmessern versehene Abisoliervorrichtung und ist dadurch gekennzeichnet, dass der einzelnen Abisoliervorrichtung je eine zusammen damit oder getrennt und relativ dazu in Kabeltransportrichtung sowie etwa quer dazu verstellbare Kabelführungs- und Klemmvorrichtung zugeordnet ist, und dass die einzelne Kabelführungs- und Klemmvorrichtung zwei Führungsstücke sowie ein dazwischen angeordnetes Klemmstück aufweist, und dass die einzelnen Teile von einer Anzahl im Abstand zueinander angeordneten und in Kabeltransportrichtung orientierten Ausnehmungen durchdrungen sind und das Klemmstück mit seinen Ausnehmungen durch eine im wesentlichen quer zur Kabeltransportrichtung orientierte Linearbewegung oder um eine Achse durchführbare Schwenkbewegung relativ zu den in den Führungsstücken angeordneten Ausnehmungen verstellbar ist.

Weitere Merkmale der Erfindung hinsichtlich des Verfahrens und der Einrichtung zur Durchführung des Verfahrens ergeben sich aus der folgenden Beschreibung in Verbindung mit der Zeichnung und den einzelnen Patentansprüchen.

Die Erfindung wird nachstehend mit Bezug auf die Zeichnung beschrieben. Es zeigt:
Fig. 1 eine in schematischer Seitenansicht dargestellte Einrichtung zum Ablängen ummantelter Kabel;
Fig. 2 eine schematisch dargestellte Aufwikkelstation für die Einrichtung gemäss Fig.1 zur Aufnahme abgelängter Kabel;
Fig. 3 ein abgelängtes Kabel mit entsprechend angebrachten Markierungen sowie mit an den Kabelenden teilweise abgezogenen Ummantelungen;
Fig. 4 eine in Seitenansicht dargestellte Trenn- und Abisoliervorrichtung für die Einrichtung gemäss Fig.1;
Fig. 5 eine schematisch dargestellte Draufsicht auf die Kabel-Transport-, Klemm-, Trenn- und Abisoliervorrichtung;
Fig. 6 die in schematischer Draufsicht dargestellte Klemm-Trenn- und Abisoliervorrichtung mit verschiedenen Phasen A, B und C des Ablaufs der Abisolierung;
Fig. 7 eine in Ansicht dargestellte erste Variante einer Kabelführungs- und Klemmvorrichtung für die Trenn- und Abisoliervorrichtung gemäss Fig.4;
Fig. 8 die im Schnitt und in Draufsicht dargestellte Kabelführungs- und Klemmvorrichtung gemäss Fig.7 in der Ausgangsstellung;
Fig. 9 die im Schnitt und in Draufsicht dargestellte Kabelführungs- und Klemmvorrichtung gemäss Fig.8 in Klemmstellung;
Fig.10 eine in Schnittansicht dargestellte zweite Variante der Kabelführungs-und Klemmvorrichtung für die Trenn-und Abisoliervorrichtung gemäss Fig.4; und
Fig.11 die in Seitenansicht dargestellte Kabelführungs- und Klemmvorrichtung gemäss Fig.10.

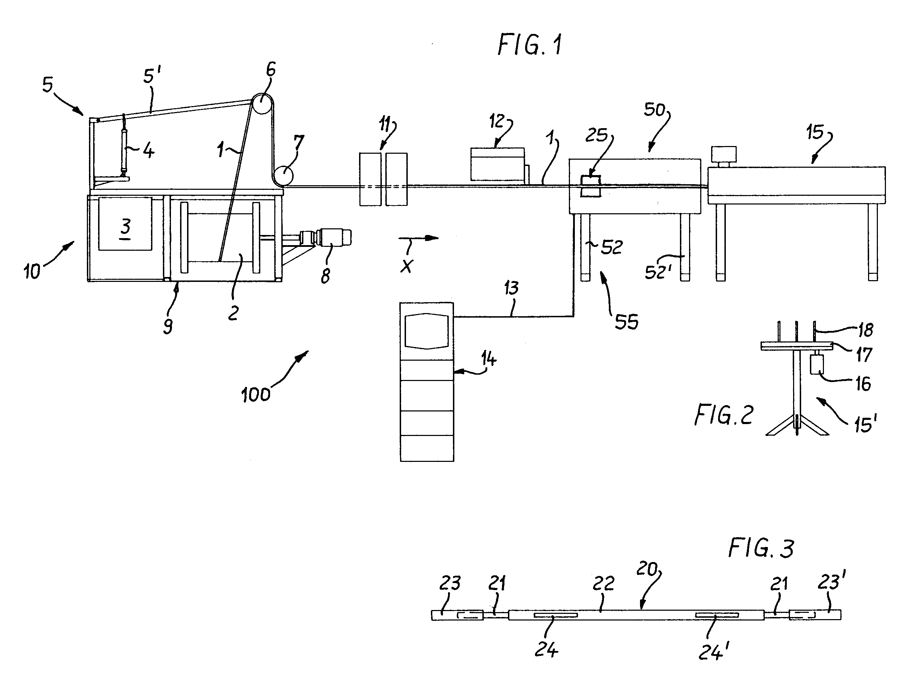

In Fig.1 ist in schematischer Seitenansicht eine in der Gesamtheit mit 100 bezeichnete Einrichtung zum kontinuierlichen Ablängen und Abisolieren ummantelter Kabel, Litzen oder dergleichen dargestellt. Die Einrichtung 100 umfasst im wesentlichen eine Abwickelstation 10 sowie eine in Kabel-Transportrichtung X im Abstand dazu angeordnete Trenn- und Abisoliervorrichtung 50, welche über Leitungen 13 mit einem Steuergerät 14 in Verbindung steht. Der Kabeltrenn- und Abisoliervorrichtung 50 ist eine schematisch dargestellte Kabel-Transportvorrichtung 25 zugeordnet. Im Anschluss an die Kabeltrenn- und Abisoliervorrichtung 50 ist eine Ablegestation 15 oder eine Aufwickelstation 15' angeordnet. Die Ablegestation 15 ist zur Aufnahme kürzerer, abisolierter Kabelstücke ausgebildet, während die Aufwickelstation 15' zur Aufnahme längerer, abisolierter Kabel ausgebildet ist.

Fig.2 zeigt die schematisch dargestellte Aufwickelstation 15', welche im wesentlichen eine von einem Antriebsmotor 16 rotierend angetriebene Scheibe 17 sowie daran angeordnete Halteelemente 18 umfasst, welche zum Aufwickeln längerer Kabel (nicht dargestellt) vorgesehen sind. Der Kabeltrenn- und Abisoliervorrichtung 50 wird entweder die an sich bekannte und vorzugsweise mobile Ablegestation 15 oder die ebenfalls an sich bekannte mobile Aufwickelstation 15' zugeordnet. Die beiden Stationen 15,15' sind gegeneinander auswechselbar und können somit je nach Länge des herzustellenden Kabels der Vorrichtung 50 zugeordnet werden.

Die Abwickelstation 10 umfasst, wie in Fig.1 schematisch dargestellt, ein Gestell 9, in welchem eine Steuereinheit 3 angeordnet ist. Weiterhin ist in dem Gestell 9 eine mit einem Antriebsmotor 8 in Wirkverbindung stehende Kabelrolle 2 in nicht näher dargestellter Weise gelagert. An dem Gestell 9 ist ferner eine Kabelspeichervorrichtung 5 angeordnet, welche einen mit einem Federelement 4 in Wirkverbindung stehenden Auslegerarm 5' hat. Am vorderen Ende des Auslegerarms 5' ist eine erste Umlenkrolle 6 angeordnet. Im Abstand zu der ersten Umlenkrolle 6 ist an dem Gestell 9 in nicht näher dargestellter Weise eine zweite Umlenkrolle 7 gelagert. Ein von der Kabelrolle 2 abgezogenes Kabel 1 wird um die beiden Umlenkrollen 6 und 7 geführt und im wesentlichen von der Kabel-Transportvorrichtung 25 der Kabeltrenn- und Abisoliervorrichtung 50 zugeführt.

In der mit Pfeilrichtung X bezeichneten Transportrichtung des Kabels 1 gesehen, kann zwischen der Abwickelstation 10 und der Kabeltrenn- und Abisoliervorrichtung 50 ein Prägegerät 11 (Heissprägung) und/oder ein Kennzeichnungsgerät 12 (Ink-Jet) angeordnet werden. Mittels des einen oder anderen Gerätes 11 und/oder 12 kann das Kabel 1 während des Transports in Pfeilrichtung X mit entsprechenden Markierungen oder Kennzeichen versehen werden.

Fig.3 zeigt als Ausführungsbeispiel ein mit schematisch dargestellten und im Abstand zueinander angeordneten Markierungen 24,24' versehenes Kabel 20, welches in der Kabeltrenn- und Abisoliervorrichtung 50 entsprechend geschnitten und abisoliert wurde. Das Kabel 20 hat eine Kabelader 21 und als Isolation einen die Kabelader 21 vollumfänglich umgebenden Kabelmantel 22. Der Kabelmantel 22 besteht beispielweise aus geeignetem Kunststoff, Gummi, Nylon oder dergleichen. An den Enden des Kabels 20 ist der Kabelmantel 22 eingeschnitten, und die beiden Mantelstücke 23 und 23' sind relativ zu dem Kabelmantel 22 abgezogen. Die beiden Mantel-Endstücke 23,23' dienen als Schutz und werden vorzugsweise erst bei der entgültigen Kabelverlegung von der Kabelader 21 abgezogen.

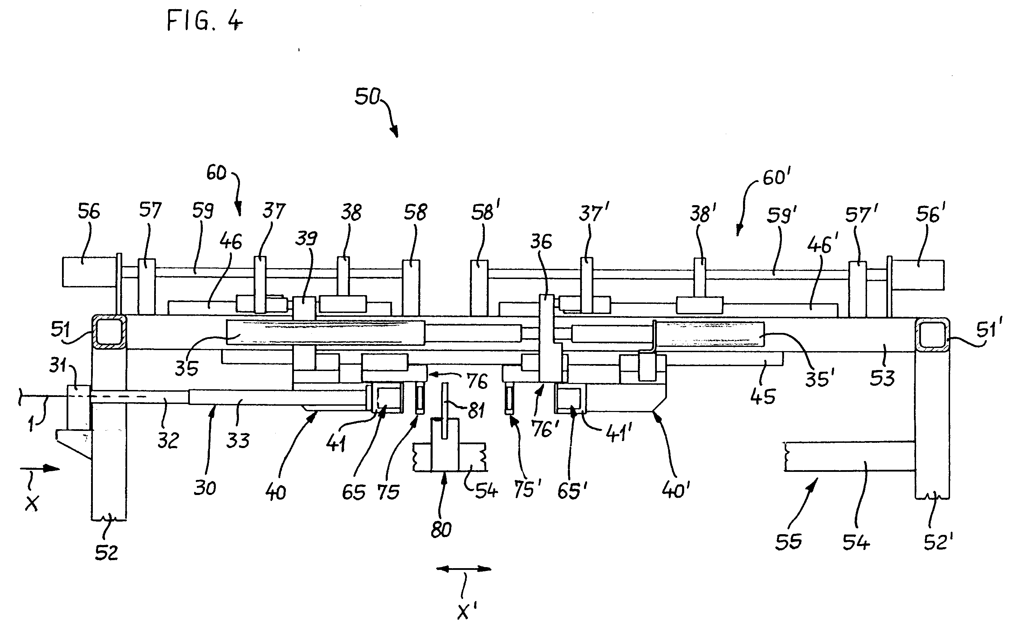

Fig.4 zeigt in schematisch dargestellter Seitenansicht die Kabeltrenn- und Abisoliervorrichtung 50, welche nachstehend beschrieben wird.

Die Kabeltrenn- und Abisoliervorrichtung 50 hat einen in der Gesamtheit mit 55 bezeichneten und nur teilweise dargestellten Maschinenständer, und man erkennt im Abstand zueinander angeordnete Stützen 52 und 52', daran angeordnete und befestigte Querträger 51 und 51' sowie dazwischen angeordnete und befestigte Längsträger 53 und 54. Der Maschinenständer 55 dient zur Aufnahme der einzelnen Funktionselemente der Kabeltrenn- und Abisoliervorrichtung und ist als eine stabile Baueinheit ausgebildet.

Am oberen Längsträger 53 sind eine erste und eine zweite Verstellvorrichtung 60,60' angeordnet. Die einzelne Verstellvorrichtung 60 oder 60' hat je zwei in parallelem Abstand zueinander angeordnete Spindeln, wobei in Fig.4 jeweils nur die vordere Spindel sichtbar ist. Die Spindeln sind in entsprechend im Abstand zueinander angeordneten Lagerböcken gelagert und je mit einem Antriebsmotor wirkverbunden.

In Fig.4 sind die beiden Verstellvorrichtungen 60 und 60' in Seitenansicht dargestellt, und man erkennt im Abstand zueinander angeordnete und mit nicht dargestellten Mitteln am Längsträger 53 befestigte Lagerböcke 57,58 und 57',58'. In den Lagerböcken 57,58 und 57',58' sind die Spindeln 59,59' gelagert, welche an dem einen Ende jeweils mit einem Antriebsmotor 56 und 56' wirkverbunden sind. Zwischen den beiden Lagerböcken 57,58 und 57',58' sind zwei mit den Verstellspindeln 59 und 59' wirkverbundene Anschlagteile 37,38 und 37',38' angeordnet. Die Anschlagteile 37,38 und 37',38' sind an Führungsschienen 46 und 46' geführt, wobei die Führungsschienen 46,46' mit nicht dargestellten Mitteln an dem Längsträger 53 befestigt sind.

An dieser Stelle wird darauf hingewiesen, dass die beiden Verstellvorrichtungen 60 und 60' im wesentlichen analog ausgebildet sind und, wie bereits erwähnt, jeweils zwei in der Ebene in parallelem Abstand zueinander angeordnete Verstellspindeln aufweisen, wobei in Fig.4 jeweils nur die vordere Spindel 59 beziehungsweise 59' sichtbar ist. Die einzelnen Spindeln sind je mit einem zugeordneten Antriebsmotor wirkverbunden und in den Lagerböcken um ihre Längsachse drehbar gelagert. Die mit den Spindeln 59,59' in Wirkverbindung stehenden Anschlagteile können auch manuell verstellt werden.

An der Unterseite des oberen Längsträgers 53 ist eine weitere Führungsschiene 45 angeordnet und mit nicht dargestellten Mitteln befestigt. An der Führungsschiene 45 sind eine erste Halterung 40 und 76 sowie eine zweite Halterung 40' und 76 angeordnet und geführt. Die erste Halterung 40 ist in nicht näher dargestellter Weise mit der ersten Verstellvorrichtung 60 und die zweite Halterung 40' in nicht dargestellter Weise mit der zweiten Verstellvorrichtung 60' wirkverbunden. Die beiden Halterungen 40 und 40' sind jeweils mit einem etwa kastenförmig ausgebildeten Führungsstück 41 und 41' versehen, in welchem je eine Kabelführungs-und Klemmvorrichtung 65,65' angeordnet sind. Die Halterungen 40,40' für die Vorrichtungen 65,65' sind je mit einem Anschlagbock 39 versehen, wobei der einzelne Anschlagbock zwischen den beiden Anschlagteilen 37, 38 bzw. 37',38' (nur einmal dargestellt) angeordnet ist. An den beiden Halterungen 76,76' ist je eine mit nicht dargestellten Formmessern versehene Abisoliervorrichtung 75,75' angeordnet. Die beiden Halterungen 76,76' Sind ferner mit einem Anschlagbock 36 (nur einmal dargestellt) versehen.

Die einzelne, schematisch dargestellte Kabelführungs- und Klemmvorrichtung 65,65' (Fig.4) kann mit nicht dargestellten Mitteln automatisch oder manuell quer zur Transportrichtung X des Kabels 1 in der Halterung 40,40' verschoben werden. Diese Verstellbewegung erfolgt in Abhängigkeit vom äusseren Durchmesser des Kabels 1.

An der ersten Halterung 40 ist eine mit mindestens zwei teleskopartig ineinander schiebbaren Rohren 32 und 33 versehene Kabelführung 30 angeordnet und mit nicht dargestellten Mitteln auswechselbar (Schnellverschluss) befestigt. Die Kabelführung 30 ist mit dem einen Rohr 33 an dem Führungsstück 41 der Halterung 40 befestigt und mit dem anderen Rohr 32 in einem Lagerbock 31 angeordnet. Die Rohre 32,33 sind entsprechend dem Durchmesser des Kabels 1 dimensioniert und werden in Abhängigkeit vom Durchmesser ausgewechselt.

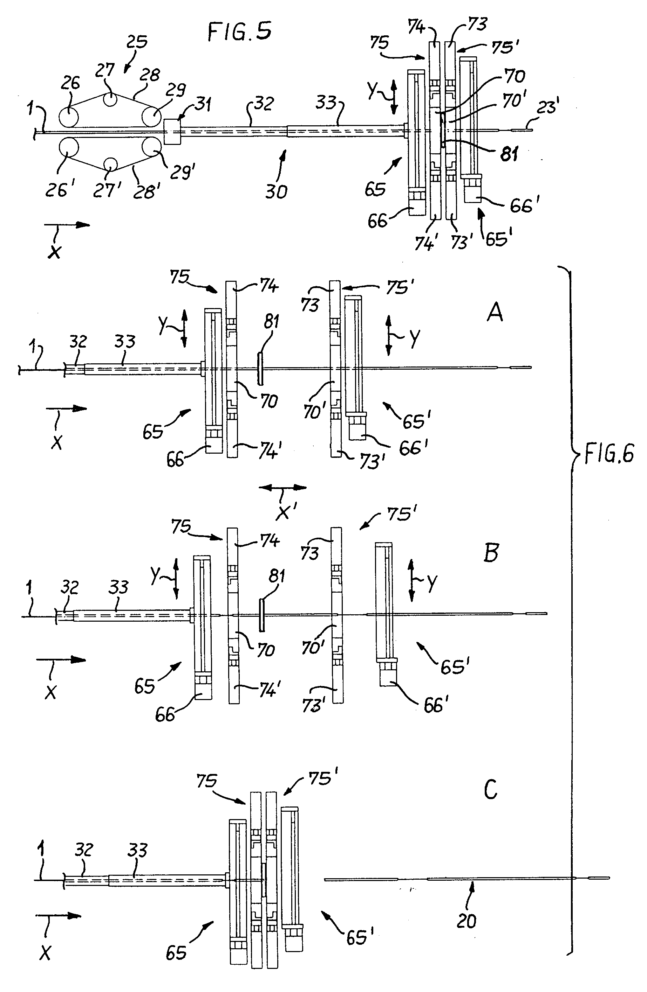

An der Führungsschiene 45 sind weiterhin die in Transportrichtung X im Abstand zueinander angeordneten Abisoliervorrichtungen 75 und 75' geführt. Die Funktion der Abisoliervorrichtungen 75,75' wird später in Verbindung mit den Figuren 5 und 6 noch beschrieben. Die beiden Kabelführungs- und Klemmvorrichtungen 65,65' sowie die beiden Abisoliervorrichtungen 75,75' sind jeweils zu beiden Seiten einer feststehenden Schneid- und Trennvorrichtung 80 angeordnet.

Weiterhin erkennt man in Fig.4 am Längsträger 53 mit nicht dargestellten Mitteln befestigte Verstellzylinder 35 und 35', mittels welcher die beiden Kabelführungs- und Klemmvorrichtungen 65,65' sowie die beiden Abisoliervorrichtungen 75,75' einerseits relativ zu der Schneid- und Trennvorrichtung 80 und andererseits relativ zueinander verstellbar sind. Die in Fig.4 mit dem Doppelpfeil X' bezeichneten Relativbewegungen der einzelnen Elemente 65,65' und 75,75' wird später anhand der Figuren 5 und 6 beschrieben. Die schematisch dargestellte und mit einem Schneidmesser 81 versehene Schneid- und Trennvorrichtung 80 ist stationär am Längsträger 54 des Maschinenständers 55 angeordnet und mit nicht dargestellten Mitteln befestigt.

In Fig.5 sind in schematisch dargestellter Draufsicht die Kabel-Transportvorrichtung 25, die teleskopartige Kabelführung 30, das Schneidmesser 81 sowie die relativ dazu verstellbaren Kabelführungs- und Klemmvorrichtungen 65,65' und Abisoliervorrichtungen 75,75' dargestellt. Im Abstand zu der Transportvorrichtung 25 sind, in Transportrichtung X gesehen, nacheinander die erste Kabelführungs- und Klemmvorrichtung 65, die erste Abisoliervorrichtung 75, das Schneidmesser 81, die zweite Abisoliervorrichtung 75' und die zweite Kabelführungs- und Klemmvorrichtung 65' angeordnet.

Die in Fig.5 schematisch dargestellte Kabel-Transportvorrichtung 25 umfasst im wesentlichen zwei Vorschubbänder 28,28', welche um entsprechend im Abstand zueinander angeordnete Umlenkrollen 26,29 und 26',29' geführt sind und durch zugeordnete Spannrollen 27,27' gespannt werden. Mittels der beiden von den Umlenkrollen 26,29 und 26',29' angetriebenen Vorschubbänder 28,28' wird das Kabel 1 in Pfeilrichtung X transportiert. Hierbei durchdringt das Kabel 1 den Lagerbock 31 sowie die beiden Rohre 32,33 der Kabelführung 30 und wird anschliessend den Kabelführungs- und Klemmvorrichtungen 65,65' sowie den Abisoliervorrichtungen 75,75' zugeführt.

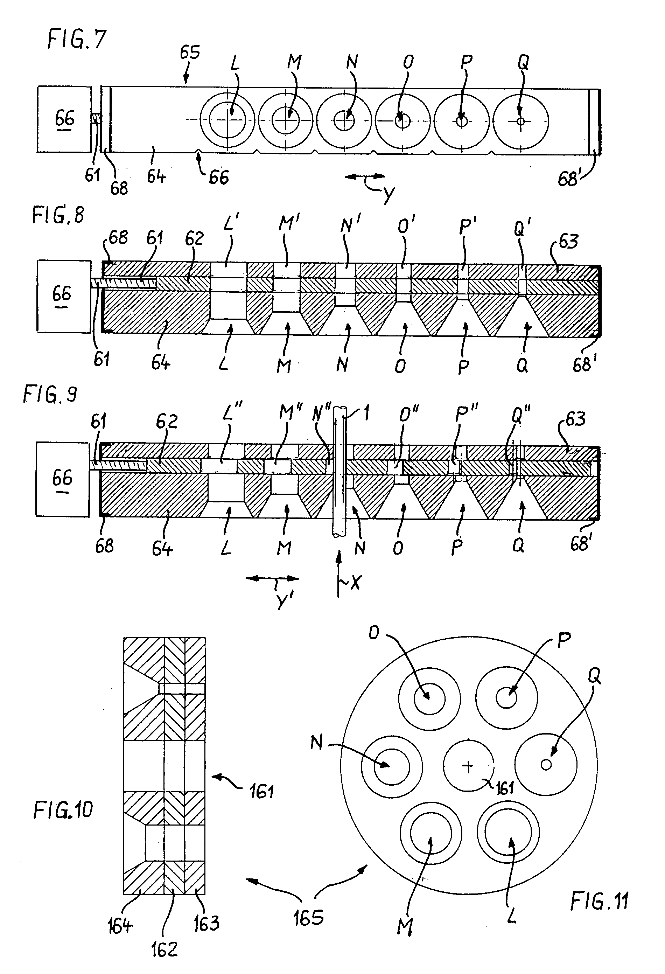

Die beiden Kabelführungs- und Klemmvorrichtungen 65,65' werden, wie in Fig.5 dargestellt, in Abhängigkeit des Kabeldurchmessers in die eine oder andere Pfeilrichtung Y entsprechend dem Kabel-Aussendurchmesser eingestellt. Die mit Verstellorganen 66,66' in Wirkverbindung stehenden Kabelführungs- und Klemmvorrichtungen 65,65' sind im wesentlichen analog ausgebildet und werden später in Verbindung mit den Figuren 7,8 und 9 noch im einzelnen beschrieben.

Die erste Abisoliervorrichtung 75 hat einen an sich bekannten Messerblock 70, welcher beispielsweise zwei verschiebbare Formmesser aufweist. Die nicht dargestellten Formmesser sind zwischen Führungsplatten angeordnet, welche mittels Stifte zusammensteckbar und in Abhängigkeit des Kabeldurchmessers beliebig kombinierbar sind. Die nicht dargestellten Formmesser sind von entsprechend zugeordneten Zylindern 74,74' zum Einschneiden des Kabelmantels 22 (Fig.3) relativ zueinander verstellbar. Die zweite Abisoliervorrichtung 75' ist analog ausgebildet und umfasst den Messerblock 70' sowie die damit wirkverbundenen Zylinder 73,73'.

Anstelle der quer zur Transportrichtung verstellbaren Formmesser kann auch ein rotierend angetriebenes und sich jeweils an den Kabeldurchmesser anpassendes Messer verwendet werden, wobei mit einem rotierend angetriebenen Messer das Kabel zirkulär eingeschnitten wird. Der schematisch dargestellte Messerblock 70 oder 70' mit den Formmessern oder aber ein nicht dargestellter Messerblock mit rotierend angetriebenem Messer ist nicht Gegenstand dieser Erfindung und deshalb nicht näher dargestellt und beschrieben.

Nachstehend werden, ausgehend von der Ausgangsposition, die wesentlichen Phasen des Kabeltrenn- und Abisolierverlaufs beschrieben:
Fig.5 zeigt die Ausgangsposition, in welcher die beiden Abisoliervorrichtungen 75,75' sowie die beiden Kabelführungs- und Klemmvorrichtungen 65,65' zu beiden Seiten des Schneidmessers 81 angeordnet sind. In dieser Stellung wurde das vordere Kabelstück bereits gerade geschnitten und das vordere Mantelstück 23' auf ein vorbestimmtes Mass abgezogen (nicht näher dargestellt). In der Stellung (Fig.5) wird das Kabel 1 im wesentlichen mittels der Transportvorrichtung 25 in Pfeilrichtung X auf die gewünschte und vorbestimmte Kabellänge geschoben.

In Fig.6 ist in den wesentlichen Phasen der Kabeltrenn- und Abisolierverlauf dargestellt.

In der mit A bezeichneten Phase hat das Kabel 1 die vorbestimmte und gewünschte Länge erreicht. In dieser Stellung werden die beiden Abisoliervorrichtungen 75,75' sowie die beiden Kabelführungs- und Klemmvorrichtungen 65,65' mittels der beiden Zylinder 35,35' (Fig.1) relativ zu dem feststehenden Schneidmesser 81 verschoben. Die Verstellbewegung der Vorrichtungen 75 und 75' sowie 65 und 65' wird hierbei im wesentlichen durch die vorher mittels der Spindeln 59,59' (Fig.4) entsprechend eingestellten Anschlagböcke 39,36 begrenzt.

In der mit B bezeichneten Phase werden die Formmesser der beiden Messerblöcke 70 und 70' mittels der Zylinder 74,74' und 73,73' zum Einschneiden des Mantels 22 (Fig.3) geschlossen, und gleichzeitig wird das Kabel in den beiden Kabelführungs- und Klemmvorrichtungen 65 und 65' gehalten und vom Schneidmesser 81 geschnitten. Anschliessend werden die Kabelführungs- und Klemmvorrichtungen 65 und 65' entsprechend dem vorher eingestellten Abzugsmass relativ zu den Abisoliervorrichtungen 75 und 75' um die gewünschte Abzugslänge, bei welcher das Kabelmantel-Endstück 23,23' (Fig.3) noch auf der Kabelader 21 verbleibt, abgezogen.

In der mit C bezeichneten Phase werden die Formmesser der Messerblöcke 70,70' und die Klemmelemente der Kabelführungs- und und Klemmvorrichtung 65,65' wieder geöffnet, so dass das geschnittene und an den beiden Enden mit einem teilweise abgezogenen Mantelstück 23,23' versehene Kabel (Fig.3) mit nicht dargestellten Mitteln der Vorrichtung 15 oder 15' (Fig.1) zugeführt werden kann. Anschliessend werden die Vorrichtungen 65,65' und 75,75' wieder in die Ausgangsstellung gemäss Fig.5 zurückgefahren, so dass der Arbeitszyklus neu beginnen kann.

Bei den vorstehend beschriebenen Verstellbewegungen der Vorrichtungen wird das eine Rohr 33 der Kabelführung 30 teleskopartig über das andere Rohr 32 geschoben oder aber wieder auseinandergezogen. Die Kabelführung 30 ist mit einer nicht näher dargestellten Halterung (Schnellverschluss) am Führungsstück 41 der Halterung 40 angeordnet und entsprechend dem Durchmesser des abzuisolierenden Kabels auswechselbar.

Die wesentlichen Arbeitsschritte des Kabeltrenn- und Abisolierverlaufs werden nachstehend beschrieben:
a) Einstellen der Kabelführungs- und Klemmvorrichtung/en 65, 65' auf den Aussendurchmesser des an einem oder beiden Enden abzuisolierenden Kabels;
b) Positionierung der beiden Abisoliervorrichtungen 75,75' und der beiden Kabelführungs- und Klemmvorrichtungen 65, 65' in bezug auf die feststehende Schneid- und Trennvorrichtung 80 sowie erster Geradschnitt des eingeführten Kabelanfangs mittels der Schneid- und Trennvorrichtung 80;
c) Einstellen der in Kabeltransportrichtung X links von der Schneid- und Trennvorrichtung 80 angeordneten Abisoliervorrichtung 75 und Kabelführungs- und Klemmvorrichtung 65 auf die erste Abisolierlänge am Kabelanfang;
d) Einschneiden und Abziehen des Kabelmantels am Kabelanfang und Rückführung der Abisoliervorrichtung 75 sowie der Kabelführungs-und Klemmvorrichtung 65 zur Schneid- und Trennvorrichtung 80 und Transport des Kabels 1 auf die gewünschte Länge durch die Transportvorrichtung 25;
e) Positionierung der beiden Abisoliervorrichtungen 75,75' sowie der beiden Kabelführungs- und Klemmvorrichtungen 65, 65' auf die gewünschte, durch die Anschläge begrenzte Abisolierlänge und Spannen des Kabels 1;
f) Trennen des Kabels 1 durch die Schneid- und Trennvorrichtung 80 sowie Einschneiden des Kabelmantels 22 mittels der beiden relativ zu der Schneid- und Trennvorrichtung verstellten Abisoliervorrichtungen 75,75';
g) Klemmen und Abziehen des Kabelmantels 22 mittels der beiden entsprechend positionierten Kabelführungs- und Klemmvorrichtungen 65,65' auf die eingestellte und durch die Anschläge begrenzte Abisolierlänge;
h) Öffnen der Abisoliervorrichtungen 75,75' und Kabelführungs- und Klemmvorrichtungen 65,65' sowie Rückführung in die auf die Schneid- und Trennvorrichtung 80 bezogene Ausgangsstellung.

Bei den vorstehend beschriebenen Funktionen sind die beiden Abisoliervorrichtungen 75,75' mit den Formmessern (nicht dargestellt) sowie die beiden Kabelführungs- und Klemmvorrichtungen 65,65', wie in Fig.5 dargestellt, für den eigentlichen Kabeltransport in die Grundstellung zurückgeführt, wodurch der Vorteil erreicht wird, dass keine zusätzlichen Führungselemente zwischen den Formmessern der Abisoliervorrichtungen 75,75' und dem Messer 81 der Schneid- und Trennvorrichtung 80 montiert werden müssen.

Die beiden Kabelführungs- und Klemmvorrichtungen 65,65' bewirken je zwei wesentliche Funktionen derart, dass das Kabel 1 einerseits in Abhängigkeit vom äusseren Durchmesser exakt geführt wird und andererseits den eingeschnittenen Kabelmantel beim Abziehen klemmend hält.

In den Figuren 7 bis 9 ist als erstes Ausführungsbeispiel die eine Kabelführungs- und Klemmvorrichtung 65 dargestellt, welche im wesentlichen ein erstes und ein zweites Führungsstück 64 und 63 sowie ein dazwischen angeordnetes Klemmstück 62 umfasst. Die Teile 62,63 und 64 werden durch entsprechend seitlich durch eine Schraubverbindung oder dergleichen gehaltene Kappen 68,68' zusammengehalten. Das Klemmstück 62 ist mittels einer Spindel 61 mit dem Verstellorgan 66 wirkverbunden und zwischen den beiden Führungsstücken 63,64 gemäss Doppelpfeilrichtung Y' relativ zu den Führungsstücken 63,64 verschiebbar angeordnet.

Das Klemmstück 62 sowie die beiden Führungsstücke 63,64 werden von im Abstand zueinander angeordneten und beim Kabeltransport in Pfeilrichtung X miteinander korrespondierenden Ausnehmungen durchdrungen (Fig.8). Das Klemmstück 62 mit den Ausnehmungen L"; M"; N"; O"; P" und Q" ist durch die Verstellbewegung relativ zu den Annehmungen L,L'; M,M'; N,N'; O,O'; P,P' und Q,Q' der Führungsstücke 63,64 verstellbar.

In Fig.9 sind die im Klemmstück 62 angeordneten Ausnehmungen L", M", N", O", P" und Q" durch die beispielsweise in die eine Richtung orientierte Verstellbewegung relativ zu den in den beiden Führungsstücken 63,64 angeordneten Ausnehmungen versetzt dargestellt. In dieser Stellung wird das in Pfeilrichtung X die Teile 64,62 und 63 durchdringende Kabel 1 beispielsweise an den nicht bezeichneten Innenwänden der Ausnehmungen N und N' der beiden Führungsstücke 63,64 klemmend gehalten.

Die in den Teilen 62,63 und 64 angeordneten und die einzelnen Teile durchdringenden Ausnehmungen sind entsprechend dem Profilquerschnitt des abzuisolierenden Kabels ausgebildet. Die Ausnehmungen können beispielsweise einen zylindrischen, ovalen, drei-, vier- oder mehreckigen Profilquerschnitt aufweisen. Die einzelnen Ausnehmungen in dem einen Führungsstück 64 sind, wie in Fig.8 und 9 dargestellt, vorzugsweise trichterförmig ausgebildet. Die trichterförmigen Ausnehmungen sind entgegen der Transportrichtung X des Kabels 1 (Fig.9) angeordnet.

Die beiden im Führungsstück 41 (Fig.4) angeordneten Kabelführungs- und Klemmvorrichtungen 65,65' sind quer zur Transportrichtung X des Kabels 1 angeordnet, welche in Abhängigkeit vom Aussendurchmesser des Kabels 1, wie in Fig.5 und Fig.6 dargestellt, gemäss dem Doppelpfeil Y entsprechend verschiebbar sind. Zur Fixierung der beiden Kabelführungs- und Klemmvorrichtungen 65,65' sind an der Unterseite des einen Führungsstücks 64 (Fig.7) im Abstand zueinander angeordnete Kerben 66 (nur einmal bezeichnet) vorgesehen, welche mit nicht dargestellten und im Führungsstück 41 im Abstand zueinander angeordneten Nocken einrastend in Eingriff gebracht werden.

Fig.10 zeigt als zweite Variante eine in Schnittansicht und in Fig.11 in Seitenansicht dargestellte Kabelführungs- und Klemmvorrichtung 165, welche im wesentlichen ein erstes Führungsstück 164 und ein zweites Führungsstück 163 sowie ein dazwischen angeordnetes Klemmstück 162 umfasst. Die einzelnen Teile sind, wie in Fig.11 dargestellt, als Kreisringscheibe ausgebildet und werden von gleichmässig am Umfang verteilt angeordneten Ausnehmungen durchdrungen. Die hier ebenfalls allgemein mit L; M; N; O; P und Q bezeichneten Ausnehmungen sind vorzugsweise analog der in den Teilen 62,63 und 64 der Kabelführungs- und Klemmvorrichtung 65,65' angeordneten Ausnehmungen L,L',L"; M,M',M"; N,N',N"; 0,0',0"; P,P',P" und Q,Q',Q" ausgebildet.

Abweichend von der Kabelführungs- und Klemmvorrichtung 65,65' gemäss den Figuren 7 bis 9, ist die Kabelführungs- und Klemmvorrichtung 165, gemäss Fig.10 und 11, mit einer zentralen Bohrung 161 auf einem nicht dargestellten Achskörper der Halterung 40,40' (Fig.4) gelagert. Die Kabelführungs- und Klemmvorrichtung 165 wird dabei, in Abhängigkeit vom Durchmesser des Kabelmantels, durch eine Schwenkbewegung um die Achse des Achskörpers in die Position geschwenkt, in welcher das Kabel die einzelnen Vorrichtungen nacheinander durchdringen kann.

## Patentansprüche

1. Verfahren zum Ablängen und Abisolieren ummantelter Kabel, Litzen, Drähte oder dergleichen, bei welchem das Kabel auf vorbestimmte Längen geschnitten und an einem oder beiden Enden der Kabelmantel eingeschnitten und teilweise oder ganz abgezogen wird, dadurch gekennzeichnet, dass der Kabelmantel von mindestens einer in Kabeltransportrichtung (X) relativ zu einer feststehenden Schneid- und Trennvorrichtung (80) verstellbaren und in Abhängigkeit von der jeweiligen Abisolierlänge durch einstellbare Anschläge begrenzten Abisoliervorrichtung (75,75') eingeschnitten und von mindestens einer in Abhängigkeit von der Länge des vom Kabel abzuziehenden Kabelmantels relativ zur Abisoliervorrichtung (75,75') in Kabeltransportrichtung (X) verstellbaren und ebenfalls durch einstellbare Anschläge begrenzten Kabelführungs- und Klemmvorrichtung (65,65') abgezogen wird.

2. Verfahren nach Anspruch 1, dadurch gekennzeichnet, dass für eine Abisolierung beider Kabelenden der Kabelmantel von zu beiden Seiten der Schneid- und Trennvorrichtung (80) angeordneten und in Abhängigkeit von der jeweiligen Abisolierlänge relativ dazu verstellbaren sowie durch einstellbare Anschläge begrenzte Abisoliervorrichtungen (75,75') eingeschnitten und jedes Kabelende in Abhängigkeit von der Abzugslänge und relativ zur korrespondierenden Abisoliervorrichtung (75,75') verstellbaren und ebenfalls durch einstellbare Anschläge begrenzte Kabelführungs- und Klemmvorrichtung/en (65, 65') abgezogen wird.

3. Verfahren nach den Ansprüchen 1 und 2, dadurch gekennzeichnet, dass die beiden Abisoliervorrichtungen (75,75'), die beiden Kabelführungs- und Klemmvorrichtungen (65,65') sowie die zugeordneten Anschläge in Abhängigkeit von der jeweiligen Abisolierlänge programmgesteuert und stufenlos, relativ zu der feststehenden Schneid- und Trennvorrichtung (80), verstellt werden.

4. Verfahren nach den Ansprüchen 1 und 2, dadurch gekennzeichnet, dass das Kabel die in Abhängigkeit vom Aussendurchmesser quer zur Kabeltransportrichtung (X) einstellbare Kabelführungs- und Klemmvorrichtung durchdringt und darin zentrisch geführt sowie zum Abziehen der Kabelenden klemmend gehalten wird.

5. Verfahren nach Anspruch 1, gekennzeichnet durch die folgenden Arbeitsschritte:
a) Einstellen der Kabelführungs- und Klemmvorrichtung/en (65, 65') auf den Aussendurchmesser des an einem oder beiden Enden abzuisolierenden Kabels;
b) Positionierung der beiden Abisoliervorrichtungen (75,75') und der beiden Kabelführungs- und Klemmvorrichtungen (65, 65') in bezug auf die feststehende Schneid- und Trennvorrichtung (80) sowie erster Geradschnitt des eingeführten Kabelanfangs mittels der Schneid- und Trennvorrichtung (80);
c) Einstellen der in Kabeltransportrichtung (X) links von der Schneid- und Trennvorrichtung (80) angeordneten Abisoliervorrichtung (75) und Kabelführungs- und Klemmvorrichtung (65) auf die erste Abisolierlänge am Kabelanfang;
d) Einschneiden und Abziehen des Kabelmantels am Kabelanfang und Rückführung der Abisoliervorrichtung (75) sowie der Kabelführungs- und Klemmvorrichtung (65) zur Schneid- und Trennvorrichtung (80) und Transport des Kabels (1) auf die gewünschte Länge durch die Transportvorrichtung (25);
e) Positionierung der beiden Abisoliervorrichtungen (75,75') sowie der beiden Kabelführungs- und Klemmvorrichtungen (65,65') auf die gewünschte, durch die Anschläge begrenzte Abisolierlänge und Spannen des Kabels (1);
f) Trennen des Kabels (1) durch die Schneid- und Trennvorrichtung (80) sowie Einschneiden des Kabelmantels (22) mittels der beiden relativ zu der Schneid- und Trennvorrichtung verstellten Abisoliervorrichtungen (75,75');
g) Klemmen und Abziehen des Kabelmantels (22) mittels der beiden entsprechend positionierten Kabelführungs- und Klemmvorrichtungen (65,65') auf die eingestellte und durch die Anschläge begrenzte Abisolierlänge;
h) öffnen der Abisoliervorrichtungen (75,75') und Kabelführungs- und Klemmvorrichtungen (65,65') sowie Rückführung in die auf die Schneid- und Trennvorrichtung (80) bezogene Ausgangsstellung.

6. Einrichtung zur Durchführung des Verfahrens nach einem der Ansprüche 1 bis 5, mit einer Kabel-Transportvorrichtung (25), einer feststehenden Schneid- und Trennvorrichtung (80) und mindestens einer relativ dazu in Kabeltransportrichtung verstellbaren und zum Einschneiden eines Kabelmantels mit Formmessern versehenen Abisoliervorrichtung, dadurch gekennzeichnet, dass der einzelnen Abisoliervorrichtung (75,75') je eine zusammen damit oder getrennt und relativ dazu in Kabeltransportrichtung (X) sowie etwa quer dazu verstellbare Kabelführungs- und Klemmvorrichtung (65,65') zugeordnet ist, und dass die einzelne Kabelführungs- und Klemmvorrichtung (65,65' oder 165) zwei Führungsstücke (63,64 oder 163,164) sowie ein dazwischen angeordnetes Klemmstück (62 oder 162) aufweist, und dass die einzelnen Teile von einer Anzahl im Abstand zueinander angeordneten und in Kabeltransportrichtung (X) orientierten Ausnehmungen (L; M; N; O; P und Q) durchdrungen sind und das Klemmstück (62 oder 162) mit seinen Ausnehmungen durch eine im wesentlichen quer zur Kabeltransportrichtung (X) orientierte Linearbewegung oder um eine Achse durchführbare Schwenkbewegung relativ zu den in den Führungsstücken (63,64) angeordneten Ausnehmungen verstellbar ist.

7. Einrichtung nach Anspruch 6, dadurch gekennzeichnet, dass die Kabelführungs- und Klemmvorrichtung (65,65') in einer je mit einem Anschlagbock (39) versehenen Halterung (40,40') angeordnet ist und die Halterung (40,40') mit dem Anschlagbock (39) zwischen zwei Anschlägen (37,38;37',38') linear und stufenlos verstellbar ist.

8. Einrichtung nach Anspruch 6, dadurch gekennzeichnet, dass die Abisoliervorrichtung (75,75') an einer je mit einem Anschlagbock (36) versehenen Halterung (76,76') angeordnet ist und die Halterung (76,76') je mit einem Anschlagbock zwischen zwei Anschlägen linear und stufenlos verstellbar ist.

9. Einrichtung nach Anspruch 6, dadurch gekennzeichnet, dass die die Teile der Kabelführungs-und Klemmvorrichtung (65,65' oder 165) durchdringenden Ausnehmungen (L; M; N; O; P und Q) im Profilquerschnitt rund, oval oder mehreckig ausgebildet sind, und dass die Ausnehmungen in dem einen Führungsstück (64 oder 164) an der der Kabel-Transportvorrichtung (25) zugewandten Seite trichterförmig ausgebildet sind.

10. Einrichtung nach den Ansprüchen 6 und 7, dadurch gekennzeichnet, dass die Kabelführungs- und Klemmvorrichtung/en (65,65') je in einem quer zur Kabeltransportrichtung (X) angeordneten Führungsstück (41,41') der Halterung (40,40') verschiebbar geführt und durch Einrastmittel (66) fixierbar sind.

11. Einrichtung nach den Ansprüchen 6 und 7, dadurch gekennzeichnet, dass die beiden Führungsstücke (163,164) und das dazwischen angeordnete und relativ dazu verstellbare Klemmstück (162) der mit den Ausnehmungen (L; M; N; O; P und Q) versehenen Kabelführungs- und Klemmvorrichtung (165) jeweils als Kreisscheibe ausgebildet und um die Achse eines Achskörpers schwenkbar sind.

12. Einrichtung nach Anspruch 6, dadurch gekennzeichnet, dass an der der Kabel-Transportvorrichtung (25) zugewandten Seite der einen Kabelführungs- und Klemmvorrichtung (65) eine aus mindestens zwei teleskopartig zusammenschiebbare Rohre (32, 33) gebildete Kabelführung (30) angeordnet und auswechselbar befestigt ist.
